# EUROPÄISCHE PATENTSCHRIFT

(11) **EP 2 242 675 B1**
(45) Veröffentlichungstag und Bekanntmachung des Hinweises auf die Patenterteilung: **25.04.2012**
(21) Anmeldenummer: 09703135.5
(22) Anmeldetag: 16.01.2009
(51) Int. Cl.: B62D 5/00

(54) **ÜBERLAGERUNGSEINRICHTUNG FÜR FAHRZEUGLENKUNG**
SUPERIMPOSITION DEVICE FOR VEHICLE STEERING SYSTEM
DISPOSITIF DE SUPERPOSITION POUR DIRECTION DE VÉHICULE

(30) Priorität: 21.01.2008 DE 102008005421
(43) Veröffentlichungstag der Anmeldung: 27.10.2010
(73) Patentinhaber: ThyssenKrupp Presta Aktiengesellschaft, 9492 Eschen (LI)
(72) Erfinder: KONRAD, Johann, 9453 Eichberg (DE); GMÜNDER, Ralf, 9050 Appenzell (CH)
(74) Vertreter: Lenzing Gerber Stute
(86) Internationale Anmeldenummer: PCT/EP2009/000256
(87) Internationale Veröffentlichungsnummer: WO 2009/092545

(56) Entgegenhaltungen:
- EP-A- 1 714 851
- WO-A-2006/072186
- DE-C- 600 469

## Beschreibung

### Stand der Technik

Die Erfindung betrifft eine Fahrzeuglenkvorrichtung für Kraftfahrzeuge mit einem Antrieb zur Unterstützung der Lenkvorrichtung, der über eine Getriebeanordnung mit einer Abtriebswelle mit einem Lenkgetriebe verbunden ist gemäß dem Oberbegriff des Anspruchs 1.

Derartige Antriebe mit einem Getriebe werden in Fahrzeuglenkvorrichtungen eingesetzt für elektrisch unterstützte Lenkhilfen und für Drehzahlüberlagerungseinrichtungen.

Bei der elektrisch unterstützten Lenkhilfe wird eine Servokraft von einem Elektromotor mit nachgeschaltetem Untersetzungsgetriebe entsprechend dem Ausschlag des Lenkrades auf die Lenkwelle oder auf die quer liegende Zahnstange des Lenksystems eingekoppelt. Dadurch wird der Kraftaufwand am Steuerrad zur Lenkung des Fahrzeuges verringert. Es ist auch möglich, mit Hilfe elektronischer Steuermittel das Hilfskraftangebot zum richtigen Zeitpunkt und nach gewünschtem Verhalten bereitzustellen, beispielsweise auch entsprechend stärker bei still stehendem Fahrzeug. Derartige elektrisch unterstützte Lenkhilfen werden deshalb heute vermehrt eingesetzt.

Ein weiterer wichtiger Einsatzbereich derartiger Elektromotor - Getriebeanordnungen in Lenksystemen betrifft insbesondere die Drehzahlüberlagerungseinrichtung mit Hilfsantrieb für ein Lenksystem für nicht spurgebundene Kraftfahrzeuge, die die Drehzahlen des Hilfsantriebes und der Steuereingriffe am Steuerrad durch den Fahrer überlagert und auf die Lenkbewegung der Räder überträgt.

Derartige Drehzahlüberlagerungseinrichtungen werden im Stand der Technik, soweit sie für Lenkungssysteme angewendet werden, auch als
Drehwinkelüberlagerungseinrichtungen bezeichnet. Drehzahlüberlagerung und Drehwinkelüberlagerung sind Synonyme.

Im Stand der Technik sind eine Reihe Systeme bekannt zur Ausbildung von elektrischen Hilfsantrieben mit Getriebeanordnung für den Einsatz in vorerwähnten Anordnungen.

Für einen spielfreien Antrieb ist ein Zykloidengetriebe mit großem Untersetzungsverhältnis aus der Patentschrift DE 600 469 bekannt. Hierbei ist als Vorteil eine unmittelbare, direkte gleichachsige Kopplung des Antriebmotors mit dem Getriebe vorgesehen. Eine Entkopplung der Antriebswelle von der Getriebeeingangswelle ist nicht vorgesehen.

Drehzahlüberlagerungsgetriebe werden oft durch ein Planetengetriebe, Schneckenradgetriebe oder auch durch ein Harmonic-Drive Getriebe realisiert.

In der gattungsbildenden DE19906703A1 wird ein derartiges Stellglied bzw. eine derartige Überlagerungseinrichtung auf Basis eines Planetengetriebes vorgestellt. In der DE19906703A1 wird ein Stellglied vorgeschlagen, bei dem eine Eingangwelle zum Ankoppeln an das Lenkrad des Lenksystems und eine Ausgangswelle zum Ankoppeln an das Lenkgetriebe des Lenksystems und eine Rotorwelle eines Elektromotors, die mit dem Überlagerungsgetriebe verbunden ist, als entsprechendes Wellengetriebe auf Basis eines Planetengetriebes gekoppelt sind. Wird der Rotor des Elektromotors in Drehung versetzt, so wird die Drehzahl der Eingangswelle mit der Drehzahl des Rotors überlagert in die Ausgangswelle eingeleitet.

In der WO2007038884 sind weitere Varianten von Überlagerungseinrichtungen vorgestellt, wobei verschiedene Getriebetypen dargestellt sind. Die Anmeldung offenbart entsprechende Systeme, in Figur 3 auf Basis eines Harmonic-Drive Getriebes, in Figuren 4, 5 auf Basis eines Kronenradgetriebes, in Figur 6 auf Basis eines Taumelgetriebes.

In der WO 2006/072186 A1 ist eine Überlagerungseinrichtung für eine Fahrzeuglenkung offenbart, bei der die Überlagerung mit einem Zahnradgetriebe mit Zahnscheiben und weiteren Zahnrädern, bekannt unter dem Begriff "Kronenradgetriebe", dargestellt ist.

Allen vorgenannten Getrieben ist gemein, dass der Rotor des Hilfsantriebs mit einem ersten Getriebeelement der Überlagerungseinrichtung gekoppelt ist.

Nachteil aller vorgenannten Beispiele aus dem Stand der Technik ist, dass ihr Betrieb mit einer erheblichen unerwünschten Geräuschbelastung verbunden ist.

### Aufgabe der Erfindung

Aufgabe der Erfindung ist es, eine Überlagerungseinrichtung für ein Lenksystem eines Kraftfahrzeuges bereit zu stellen, das eine verbesserte Geräuschreduktion bei einem einfachen Aufbau ermöglicht.

### Lösungsansatz

Gelöst wird die Aufgabe durch eine Drehzahlüberlagerungseinrichtung für ein Fahrzeuglenksystem mit den Merkmalen des Anspruchs 1.

Weil bei einer Drehzahlüberlagerungseinrichtung mit einer Abtriebswelle, die zur Antriebswelle in deren Achsrichtung ausgerichtet ist, einer ersten Trägeranordnung, welche die Abtriebswelle und die Antriebswelle mindestens teilweise gelagert drehbar positioniert, einem Hilfsantrieb mit einem Rotor, der mit einem ersten Getriebeelement eines Überlagerungsgetriebes wirkmäßig drehfest verbunden ist, und einer zweiten Trägeranordnung, die den Hilfsantrieb hält und den Rotor drehbar lagert und karosseriefest angeordnet ist, wobei der Rotor des Hilfsantriebes koaxial die Abtriebswelle und/oder Antriebswelle umschließt und das Überlagerungsgetriebe mit einer Drehzahlübersetzung kleiner 1 die Drehzahl des Rotors auf die Drehzahl der Abtriebswelle überträgt, zwischen dem Rotor und dem ersten Getriebeelement ein Zwischenstück derart angeordnet ist, dass der Rotor mit dem ersten Getriebeelement in Drehrichtung ausschliesslich unter Zwischenschaltung des Zwischenstücks wirkmäßig verbunden ist, wird eine direkte Geräuschübertragung von dem Rotor auf das Überlagerungsgetriebe verhindert. Durch die erfindungsgemässe Lösung wird das Getriebe, das die Lenkwinkelüberlagerung bewirkt, vom Hilfsantrieb, der bevorzugt als ein elektrischer Hilfsantrieb, weiter bevorzugt auf Basis eines permanenterregten bürstenlosen Elektromotors ausgebildet ist, geräuschmäßig getrennt.

Zusätzlich zum Getriebe und dem Hilfsantrieb kann eine Sicherheitsbremse vorgesehen sein, die im Störungsfall einen direkten Durchgriff des Lenkeingriffs auf das Lenkritzel ermöglicht. Derartige Sicherheitseinrichtungen sind in verschiedenen Ausführungsformen im Stand der Technik bekannt und brauchen daher hier nicht näher erläutert zu werden.

Die erfindungsgemässe Lösung ermöglicht, die Drehzahlüberlagerungseinrichtung kompakt anzuordnen. Dabei sind die Baugruppen Hilfskraftantrieb, Sicherheitsbremse und Überlagerungsgetriebe koaxial zueinander, jedoch voneinander getrennt angeordnet. Die Baugruppen können sogar in separaten Gehäuseteilen mit einer hohen Geräuschentkopplung angeordnet sein. Das Zwischenstück ermöglicht einen Ausgleich von auftretenden Lagetoleranzen.

Weiter wird durch die erfindungsgemässe Lösung das Drehmoment vom Rotor des Hilfsantriebs unter Zwischenschaltung des Elastomers, das elastische und dämpfende Eigenschaften aufweist, auf das erste Getriebeelement des Überlagerungsgetriebes übertragen. Dadurch ist ein direkter metallischer Kontakt zwischen korrespondierenden Oberflächen an Rotor und Getriebeelement, über die ein Drehmoment übertragen werden soll, vermieden.

### Figurenbeschreibung

Nachfolgend werden Ausführungsbeispiele der Erfindung anhand der Zeichnung beschrieben. Es zeigen:

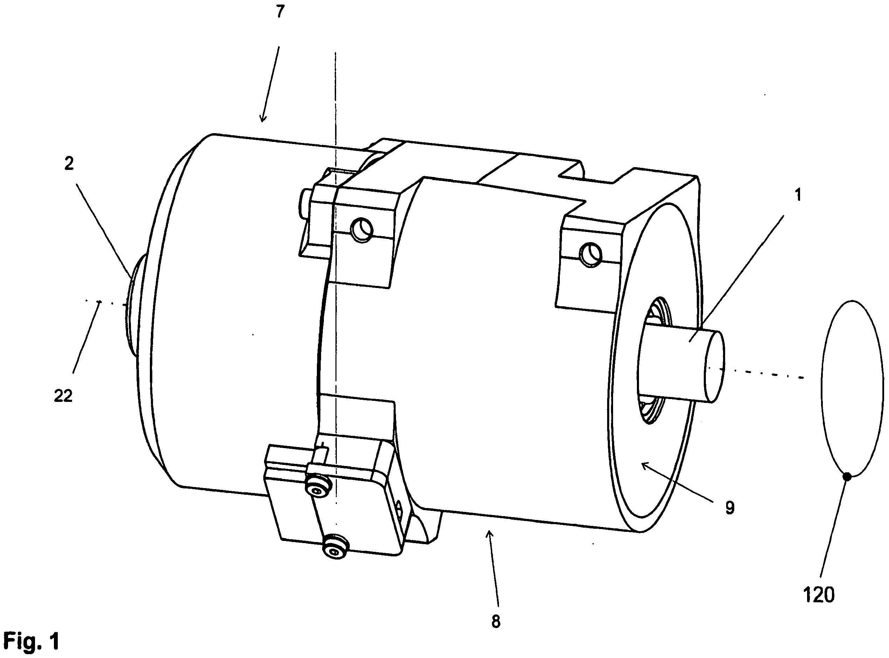

- Fig. 1:: eine Ausführung der Drehzahlüberlagerungseinrichtung in einer perspektivischen Darstellung;

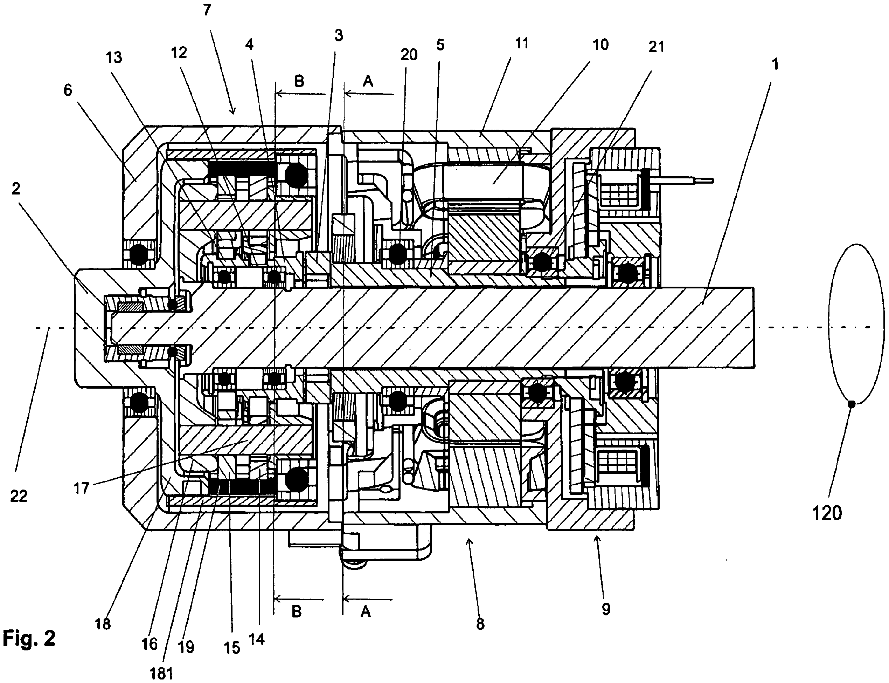

- Fig. 2:: eine Ausführung der Drehzahlüberlagerungseinrichtung mit einem Zykloidengetriebe als Überlagerungsgetriebe in einem Längsschnitt;

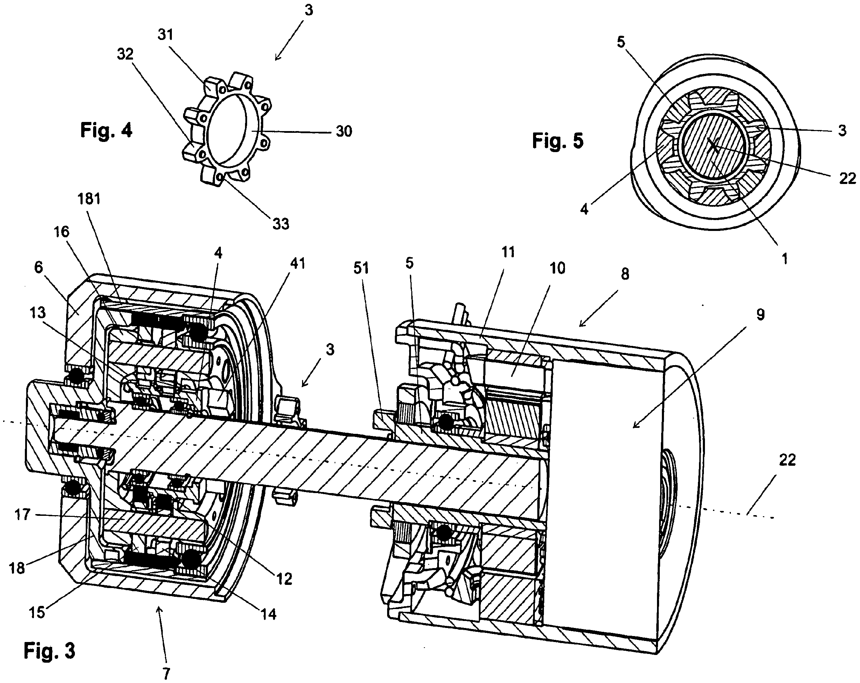

- Fig. 3:: die Drehzahlüberlagerungseinrichtung gemäß Fig. 2 mit auseinandergezogenen Baugruppen;
- Fig. 4:: ein Zwischenstück für die Kupplung in einer perspektivischen Darstellung;
- Fig. 5:: die Kupplung der Baugruppen aus Fig. 2 in einem Querschnitt;

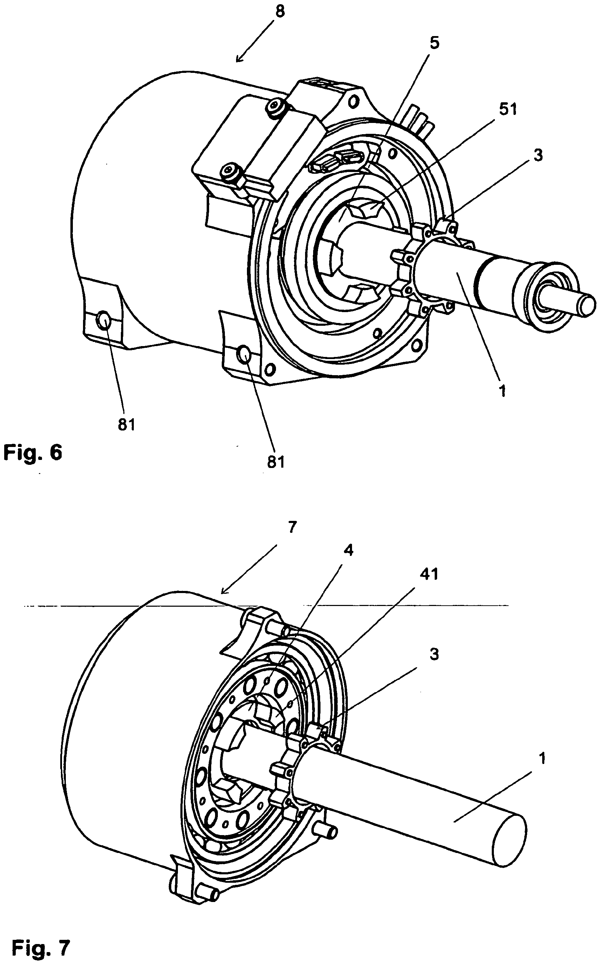

- Fig. 6:: den Elektromotor der Drehzahlüberlagerungseinrichtung gemäß Fig. 2 in einer perspektivischen Ansicht der Kupplungsseite;
- Fig. 7:: die Getriebebaugruppe der Drehzahlüberlagerungseinrichtung gemäß Fig. 2 in einer perspektivischen Ansicht der Kupplungsseite; sowie

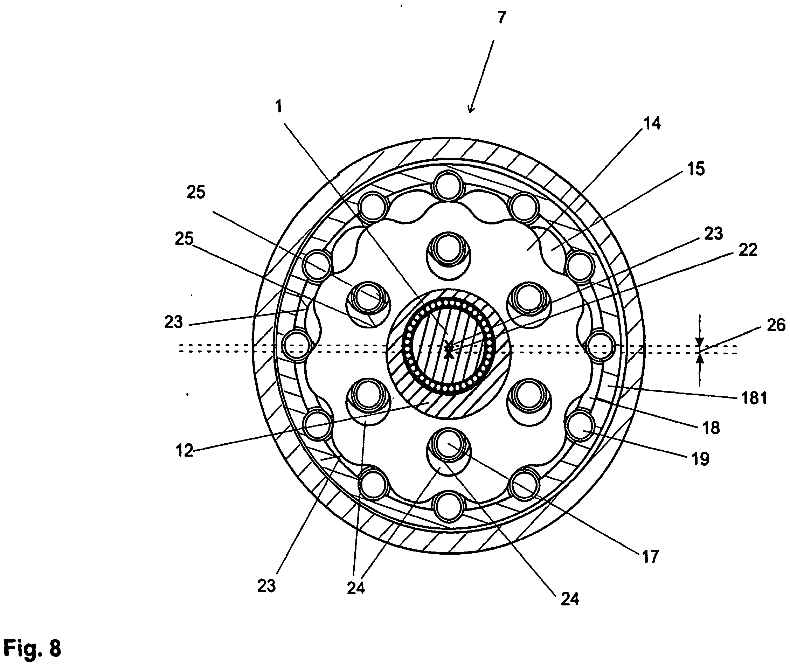

- Fig. 8:: ein Zykloidengetriebe, wie es für die Getriebebaugruppe der Drehzahlüberlagerungseinrichtung gemäß Fig. 2 verwendet werden kann, in einem Querschnitt.

Die Figur 1 zeigt eine Ausführung der Drehzahlüberlagerungseinrichtung in einer perspektivischen Darstellung mit einer Antriebswelle 1 und einer Abtriebswelle 2, die koaxial angeordnet und um eine Drehachse 22 drehbar sind. Die Drehachse 22 definiert für die gesamte Anordnung eine Axialrichtung, eine Umfangsrichtung und entsprechend die Radialrichtung, auf die nachfolgend Bezug genommen wird. Die Drehzahlüberlagerungseinrichtung weist ein Getriebe 7 und einen gleichachsigen Hilfsantrieb 8 auf, die die Wellen 1 und 2 umgeben.

In den Figuren 2, 3 und 8 ist die Drehzahlüberlagerungseinrichtung näher dargestellt.

Die Drehzahlüberlagerungseinrichtung, wie in den Figuren 2 und 3 gezeigt umfasst folgende Komponenten:
- die Antriebswelle 1, mit einer Drehachse 22;
- die Abtriebswelle 2, mit einer Drehachse 22;
- einen Hilfsantrieb 8, 5, 10 der einen Rotor 5, mit einer Drehachse 22, antreibt;
- ein Zwischenstück 3
- ein erstes Getriebeelement 4
- einer karosseriefeste zweite Trägeranordnung 11, die einen Stator 10 des Hilfsantriebs 8, 5, 10 trägt und den Rotor 5 des Hilfsantriebs 8, 5, 10 in Lagern 20, 21 drehbar lagert,
- eine separate erste Trägeranordnung 6, die die Antriebswelle 1, die Abtriebswelle 2 und das erste Getriebeelement 4, in Lagern drehbar lagert;
- Zwei um die Längsachse 22 exzentrisch rotierbar angeordnete Kurvenscheiben 14, 15 mit einer wellenartigen Aussenkontur 23, wobei die Kurvenscheiben 14, 15 kreisrunde, koaxial angeordnete Zentralöffnung im Zentrum aufweisen und, wobei auf einem konzentrischen Teilkreis der Scheiben, der zwischen der Zentralöffnung und der Aussenkontur liegt, sind mindestens zwei Bohrungen 24, vorgesehen sind;
- einen ersten Träger 16, drehfest angeordnet an der Antriebswelle 1, dessen Achse in der Längsachse liegt und um diese rotierbar ist, wobei an dem ersten Träger in paralleler Richtung zur Längsachse 22 Mitnehmerbolzen 17 angeordnet sind, welche in die Bohrungen der Kurvenscheiben 14, 15 eingreifen und an den Innenflächen 25 der Bohrungen abwälzen bzw. abgleiten;
- einen zweiten Träger 18 angeordnet an der Abtriebswelle 2, dessen Achse in der Längsachse 22 liegt und um diese rotierbar ist, wobei an dem zweiten Träger in paralleler Richtung zur Längsachse 22 radial beabstandet auf einem konzentrisch zur Längsachse liegenden Teilkreis Aussenbolzen 19 angeordnet sind, an denen sich die wellenförmige Aussenkontur 23 der Kurvenscheiben 14, 15 durch die exzentrische radial taumelnde Bewegung abwälzt;
wobei der Rotor 5 koaxial drehbar um die Antriebswelle 1 und die gemeinsame Längsachse 22 gelagert angeordnet und mit dem Hilfsantrieb 8, 5, 10 wirkverbunden ist und der Rotor 5 über das Zwischenstück 3 mit dem ersten Getriebeelement 4 in Drehrichtung wirkverbunden ist und wobei das erste Getriebeelement 4 für jede

Kurvenscheibe 14, 15 einen dieser zugeordneten Exzenter 12, 13 mit einer Exzentrizität 26 gegenüber der Längsachse 22 trägt und der Exzenter 12, 13 in die Zentralöffnungen der jeweils zugeordneten Kurvenscheibe 14, 15 eingreift, um eine um die Längsachse 22 rotierenden lateral taumelnden Bewegung der zugeordneten Kurvenscheiben 14, 15 zu bewirken, wobei die Antriebs- und die Abtriebswelle 1, 2 und das erste Getriebeelement 4 mit einem Drehzentrum in einer einzigen Längsachse 22 angeordnet sind.

Als Äquivalent für die Drehübertragung zwischen der Antriebswelle 1 und der sich lateral taumelnd bewegenden Kurvenscheibe 14, 15 vermittels der Bohrungen und den Mitnehmerbolzen 17, 19 kann die Drehübertragung auch über eine Oldham-Kupplung oder eine andere Exzentrizitäten ausgleichende Kupplung erfolgen.

Das Kurvenscheibengetriebe kann in einer alternativen Ausführungsform mit einer einzelnen Kurvenscheibe oder aber auch mit mehr als zwei Kurvenscheiben ausgebildet werden. Die Ausführung mit zwei Kurvenscheiben, wie in den Figuren 2, 3 und 8 dargestellt, wird bevorzugt, da hierbei eine genügend starke Verminderung der Laufgeräüsche auch bei noch einfacher Realisierung erreicht werden kann.

Ein Eingriffsstück 41 des ersten Getriebeglieds 4 und ein weiteres Eingriffsstück 51 des Rotors 5 bilden eine formschlüssige Kupplung zur drehfesten antriebsmäßigen Verbindung. Ein Zwischenstück 3 ist als Dämpfungsglied zwischen die Eingriffsstücke 41 und 51 eingesetzt.

Die Figur 4 zeigt das Zwischenstück 3 für die Kupplung in einer perspektivischen Darstellung. Das Zwischenstück 3 weist einen ringförmigen Grundkörper 30 mit einer Anzahl radial nach außen weisender Zähne 31 auf. Die Zähne 31 sind mit Zahnflanken 32 versehen, die in diesem Ausführungsbeispiel eine Form ähnlich einer Evolvente aufweisen. Dabei liegt der Mittelpunkt der Evolvente außerhalb des Fußkreises der Zähne 31, also in diesem Ausführungsbeispiel einem radialen Abstand von der äußeren Umfangsfläche des ringförmigen Grundkörpers 30. Hierdurch wird eine gleichförmige Lastverteilung auf die Zähne 31 und dadurch ein geringer Verschleiß erreicht.

Etwa mittig auf den in Axialrichtung weisenden Stirnflächen der Zähne sind zumindest auf einer Seite Vorsprünge als Distanzhalter 33 angeordnet. Diese Vorsprünge 33 liegen in Axialrichtung an den benachbarten Wellen an, genauer gesagt bewirken sie einen gewissen axialen Abstand zwischen den Eingriffstücken 51 des Rotors 5 und den Eingriffstücken 41 des ersten Getriebeglieds 4 und verhindern dadurch auch einen flächigen Kontakt der Wellen mit dem Zwischenstück 3, welcher im Betrieb Reibung und Verschleiß verursachen könnte. Dadurch ist auch ein vollflächiges Verquetschen des Zwischenstücks verhindert, so dass Wärmeausdehnungsunterschiede oder Toleranzen gut aufgenommen werden können. Das Zwischenstück 3 ist einstückig aus einem Elastomer gefertigt.

Die Figur 5 zeigt die Kupplung der Baugruppen aus Fig. 2 in einem Querschnitt. Es ist ersichtlich, dass die in Umfangsrichtung der Eingriffsstücke 41 bzw. 51 voreilenden bzw. nacheilenden Wirkflächen in ihrer Oberflächenform den Flanken 32 der Zähne 31 angepasst sind, so dass auch hier eine flächige Anlage zur Drehmomentübertragung gewährleistet ist.

Die Figur 6 zeigt den Elektromotor der Drehzahlüberlagerungseinrichtung gemäß Fig. 2 in einer perspektivischen Ansicht der Kupplungsseite. Bereits beschriebene Bauelemente tragen gleiche Bezugsziffern. Die Ausgestaltung des Eingriffsstücks 51 nach Art einer Klauenkupplung ist hier erkennbar. Ebenfalls dargestellt ist die Anpassung der treibenden Flächen an die Form der Zahnflanken 32 des Zwischenstücks 3.

Die Figur 7 zeigt die Getriebebaugruppe der Drehzahlüberlagerungseinrichtung gemäß Fig. 2 in einer perspektivischen Ansicht der Kupplungsseite. Auch hier ist die Ausgestaltung des Eingriffsstücks 41 dargestellt, die praktisch identisch mit derjenigen des Eingriffstücks 51 ist.

In einer bevorzugten Ausführungsform, die in der Zeichnung nicht dargestellt ist, weist das Zwischenstück 3 Führungsstege auf, die anstelle der Vorsprünge 33 auf einigen oder allen in Axialrichtung weisenden Stirnflächen des Zwischenstücks 3 angeordnet sind. Die Führungsstege überragen die Zähne 31 des Zwischenstücks um einige Millimeter in Axialrichtung. Wenigstens eines der Eingriffstücke 41 und 51 ist dann entsprechend modifiziert, um die Führungsstege bei der Montage aufnehmen zu können. Durch diese Führungsstege ist bei der Montage der Motoreinheit und der Getriebeeinheit an einander sichergestellt, dass das Einführen des Zwischenstücks in das gegenüber liegende Eingriffstück so erfolgt, dass eine korrekte Positionierung bereits vor dem endgültigen Zusammenfügen des Getriebes 7 und des Hilfsantriebs 8 erfolgen muss. Die Führungsstege erzwingen diese Positionierung bereits dann, wenn die Motoreinheit und die Getriebeeinheit noch einen Abstand in der Größenordnung der Höhe der Führungsstege von einander aufweisen, so dass die Positionierung auch optisch kontrolliert werden kann.

Weiter kann eine besonders kompakte Ausführungsform vorsehen, dass die Eingriffstücke 41 und 51 im Durchmesser kleiner sind als der ringförmige Grundkörper 30 des Zwischenstücks 3. Bei dieser Alternative sind die Zähne des Zwischenstücks dann radial nach Innen weisend an dem ringförmigen Grundkörper angeordnet. Diese Ausführung ist im Durchmesser besonders kompakt, so dass in diesem Bereich der Baugruppe um den Kupplungsbereich herum zusätzlicher Bauraum verfügbar wird. In diesem Bauraum kann beispielsweise ein ringförmiges Sensorelement zur Erfassung des Drehwinkels und der aktuellen Position der darin liegenden Welle angeordnet werden.

## Patentansprüche

1. Drehzahlüberlagerungseinrichtung für ein Fahrzeuglenksystem mit einer Abtriebswelle (2), die zur Antriebswelle (1) in deren Achsrichtung (22) ausgerichtet ist, mit einer ersten Trägeranordnung (6), welche die Abtriebswelle (2) und die Antriebswelle (1) mindestens teilweise gelagert drehbar positioniert, einem Hilfsantrieb (5, 10) mit einem Rotor (5), der mit einem ersten Getriebeelement (4) eines Überlagerungsgetriebes (7) wirkmäßig drehfest verbunden ist, und mit einer zweiten Trägeranordnung (11), die den Hilfsantrieb (5, 10) hält und den Rotor (5) drehbar lagert und die karosseriefest angeordnet ist, wobei der Rotor (5) des Hilfsantriebes (5, 10) koaxial die Abtriebswelle (2) und/oder Antriebswelle (1) umschliesst, und wobei das Überlagerungsgetriebe (7) mit einer Drehzahlübersetzung kleiner 1 die Drehzahl des Rotors (5) auf die Drehzahl der Abtriebswelle (2) überträgt, wobei zwischen dem Rotor (5) und dem ersten Getriebeelement (4) ein Zwischenstück (3) angeordnet ist derart, dass der Rotor (5) mit dem ersten Getriebeelement (4) in Drehrichtung ausschliesslich unter Zwischenschaltung des Zwischenstücks (3) wirkmäßig verbunden ist , **dadurch gekennzeichnet, dass** das Zwischenstück (3) aus einem Werkstoff mit elastischen und dämpfenden Eigenschaften, insbesondere aus einem Elastomer oder einem Kunststoff mit elastischen dämpfenden Eigenschaften gebildet ist.

2. Drehzahlüberlagerungseinrichtung für ein Fahrzeuglenksystem nach Anspruch 1, **dadurch gekennzeichnet, dass** das Zwischenstück (3) einen ringförmigen Grundkörper (30) und eine Anzahl radial nach außen weisender Zähne (31) aufweist.

3. Drehzahlüberlagerungseinrichtung für ein Fahrzeuglenksystem nach einem der vorhergehenden Ansprüche, **dadurch gekennzeichnet, dass** das Zwischenstück (3) Zähne (31) mit konvexen Zahnflanken (32) nach Art einer Evolventenverzahnung aufweist.

4. Drehzahlüberlagerungseinrichtung für ein Fahrzeuglenksystem nach Anspruch 3, **dadurch gekennzeichnet, dass** die Zahnflanken (32) des Zwischenstücks (3) einen Krümmungsmittelpunkt aufweisen, der radial außerhalb des Fußkreises der Zähne (31) liegt.

5. Drehzahlüberlagerungseinrichtung für ein Fahrzeuglenksystem nach einem der vorhergehenden Ansprüche, **dadurch gekennzeichnet, dass** das erste Getriebeelement (4) ein Eingriffsstücke (41) trägt, und dass der Rotor (5) ein zweites Eingriffsstück (51) trägt, wobei die Eingriffsstücke (41, 51) mit Klauen versehen als formschlüssige Kupplung versehen sind.

6. Drehzahlüberlagerungseinrichtung für ein Fahrzeuglenksystem Anspruch 5, **dadurch gekennzeichnet, dass** die Eingriffsstücke (41, 51) mit konkaven Wirkflächen versehen sind, die komplementär zu den konvexen Zahnflanken (32) des Zwischenstücks (3) ausgebildet sind.

7. Drehzahlüberlagerungseinrichtung für ein Fahrzeuglenksystem nach einem der vorhergehenden Ansprüche, **dadurch gekennzeichnet, dass** das Zwischenstück (3) zumindest auf einer Seite mit in Axialrichtung auf den Zähnen (31) angeordneten Distanzhaltem (33) versehen ist.

8. Drehzahlüberlagerungseinrichtung für ein Fahrzeuglenksystem nach einem der vorhergehenden Ansprüche, **dadurch gekennzeichnet, dass** das Zwischenstück eine geradzahlige Anzahl von Zähnen (31) aufweist, insbesondere acht Zähne (31).

## Claims

1. Device for superimposing rotational speeds for a vehicle steering system, comprising an output shaft (2) which is aligned toward the drive shaft (1) in its axial direction (22), comprising a first carrier arrangement (6) which positions the output shaft (2) and the drive shaft (1) rotatably in an at least partly supported manner, an auxiliary drive (5, 10) having a rotor (5) which is operatively connected in a torque-proof manner to a first gear element (4) of a superimposition gear (7), and comprising a second carrier arrangement (11) which holds the auxiliary drive (5, 10) and supports the rotor (5) so that it can rotate and which is fixed to the vehicle body, wherein the rotor (5) of the auxiliary drive (5, 10) coaxially surrounds the output shaft (2) and/or the drive shaft (1), and wherein the superimposition gear (7) transmits the rotational speed of the rotor (5) to the rotational speed of the output shaft (2) at a rotational speed ratio which is less than 1, wherein an intermediate piece (3) is arranged between the rotor (5) and the first gear element (4) in such a way that the rotor (5) is operatively connected to the first gear element (4) in the rotational direction solely by interconnecting the intermediate piece (3), **characterised in that** the intermediate piece (3) is formed from a material having elastic and damping properties, in particular from an elastomer or plastic having elastic, damping properties.

2. Device for superimposing rotational speeds for a vehicle steering system according to Claim 1, **characterised in that** the intermediate piece (3) has an annular base body (30) and a number of teeth (31) pointing radially outwards.

3. Device for superimposing rotational speeds for a vehicle steering system according to any one of the preceding claims, **characterised in that** the intermediate piece (3) has teeth (31) with convex tooth faces (32) in the form of an involute toothing.

4. Device for superimposing rotational speeds for a vehicle steering system according to Claim 3, **characterised in that** the tooth faces (32) of the intermediate piece (3) have a centre of curvature which is radially outside the root circle of the teeth (31).

5. Device for superimposing rotational speeds for a vehicle steering system according to any one of the preceding claims, **characterised in that** the first gear element (4) bears an engaging piece (41), and **in that** the rotor (5) bears a second engaging piece (51), wherein the engaging pieces (41, 51) are provided with claws as a positive-fit coupling.

6. Device for superimposing rotational speeds for a vehicle steering system according to Claim 5, **characterised in that** the engaging pieces (41, 51) are provided with concave active surfaces which are designed to complement the convex tooth faces (32) of the intermediate piece (3).

7. Device for superimposing rotational speeds for a vehicle steering system according to any one of the preceding claims, **characterised in that** the intermediate piece (3) is at least on one side provided with spacers (33) arranged on the teeth (31) in the axial direction.

8. Device for superimposing rotational speeds for a vehicle steering system according to any one of the preceding claims, **characterised in that** the intermediate piece has an even number of teeth (31), in particular eight teeth (31).

## Revendications

1. Dispositif de superposition de vitesse de rotation pour un système de direction de véhicule, comprenant un arbre de sortie d'entraînement (2), qui est orienté vers l'arbre d'entraînement (1) dans la direction d'axe (22) de celui-ci, comprenant par ailleurs un premier agencement de support (6) qui positionne au moins en partie par un montage en rotation, l'arbre de sortie d'entraînement (2) et l'arbre d'entraînement (1), l'ensemble comprenant également un moyen d'entraînement auxiliaire (5, 10) avec un rotor (5), qui, sur le plan de l'interaction, est relié de manière fixe en rotation avec un premier élément de transmission (4) d'une transmission de superposition (7), et comprenant finalement un deuxième agencement de support (11), qui supporte le moyen d'entraînement auxiliaire (5, 10) et assure le montage en rotation du rotor (5) tout en étant agencé de manière fixe avec la carrosserie, dispositif dans lequel le rotor (5) du moyen d'entraînement auxiliaire (5, 10) entoure de manière coaxiale l'arbre de sortie d'entraînement (2) et/ou l'arbre d'entraînement (1), et dans lequel la transmission de superposition (7) transfère, avec un rapport de vitesse de rotation inférieur à 1, la vitesse de rotation du rotor (5) sur la vitesse de rotation de l'arbre de sortie d'entraînement (2), une pièce intermédiaire (3) étant agencée entre le rotor (5) et le premier élément de transmission (4) de façon telle que le rotor (5) soit relié de manière active au premier élément de transmission (4), dans la direction de rotation, exclusivement avec interposition de la pièce intermédiaire (3),
**caractérisé en ce que** la pièce intermédiaire (3) est réalisée en un matériau avec des propriétés d'élasticité et d'amortissement, notamment en un élastomère ou une matière plastique avec des propriétés d'élasticité et d'amortissement.

2. Dispositif de superposition de vitesse de rotation pour un système de direction de véhicule, selon la revendication 1, **caractérisé en ce que** la pièce intermédiaire (3) comprend un corps de base (30) de forme annulaire et un certain nombre de dents (31) dirigées radialement vers l'extérieur.

3. Dispositif de superposition de vitesse de rotation pour un système de direction de véhicule, selon l'une des revendications précédentes, **caractérisé en ce que** la pièce intermédiaire (3) comporte des dents (31) avec des flancs de dents (32) convexes à la manière d'une denture à développante.

4. Dispositif de superposition de vitesse de rotation pour un système de direction de véhicule, selon la revendication 3 **caractérisé en ce que** les flancs de dents (32) de la pièce intermédiaire (3) présentent un centre de courbure, qui se situe radialement à l'extérieur du cercle de pied des dents (31).

5. Dispositif de superposition de vitesse de rotation pour un système de direction de véhicule, selon l'une des revendications précédentes, **caractérisé en ce que** le premier élément de transmission (4) porte une pièce d'engrènement (41), et **en ce que** le rotor (5) porte une deuxième pièce d'engrènement (51), les pièces d'engrènement (41, 51) étant pourvues de crabots en guise d'accouplement par complémentarité de forme ou par entraînement mécanique positif.

6. Dispositif de superposition de vitesse de rotation pour un système de direction de véhicule, selon la revendication 5, **caractérisé en ce que** les pièces d'engrènement (41, 51) sont munies de surfaces actives concaves, qui sont réalisées de manière complémentaire aux flancs de dent (32) de la pièce intermédiaire (3).

7. Dispositif de superposition de vitesse de rotation pour un système de direction de véhicule, selon l'une des revendications précédentes, **caractérisé en ce que** la pièce intermédiaire (3) est munie, au moins sur un côté, d'entretoises d'espacement (33) agencées en direction axiale sur les dents (31).

8. Dispositif de superposition de vitesse de rotation pour un système de direction de véhicule, selon l'une des revendications précédentes, **caractérisé en ce que** la pièce intermédiaire présente un nombre pair de dents (31), notamment huit dents (31).
